# FASCICULE DE BREVET EUROPEEN

(11) **EP 2 491 277 B1**
(45) Date de publication et mention de la délivrance du brevet: **13.04.2016**
(21) Numéro de dépôt: 10784561.2
(22) Date de dépôt: 20.10.2010
(51) Int. Cl.: F16H 61/448, F16H 61/4052, F16H 61/4157

(54) **DISPOSITIF DE TRANSMISSION HYDROSTATIQUE PERMETTANT UN FREINAGE AMELIORE**
HYDROSTATISCHE GETRIEBEVORRICHTUNG ZUR ERMÖGLICHUNG VON VERBESSERTER BREMSLEISTUNG
HYDROSTATIC TRANSMISSION DEVICE ENABLING IMPROVED BRAKING

(30) Priorité: 22.10.2009 FR 0957410
(43) Date de publication de la demande: 29.08.2012
(73) Titulaire: Poclain Hydraulics Industrie, 60410 Verberie (FR)
(72) Inventeur: HEREN, Jean, F-60280 Margny Les Compiègne (FR); VIARD, Julien, F-60700 Pontpoint (FR)
(74) Mandataire: Intès, Didier Gérard André
(86) Numéro de dépôt international: PCT/FR2010/052228
(87) Numéro de publication internationale: WO 2011/048327

(56) Documents cités:
- EP-A1- 0 244 543
- FR-A1- 2 891 593
- US-A- 3 768 263

## Description

L'invention concerne un dispositif de transmission hydrostatique comprenant au moins un premier moteur élémentaire alimenté via une enceinte d'alimentation et dont l'échappement de fluide se fait via une enceinte d'échappement, et un sélecteur de cylindrée, le sélecteur de cylindrée étant apte à adopter une position de bipasse, dans laquelle ladite enceinte d'alimentation est mise en communication avec ladite enceinte d'échappement via une liaison de bipasse, le dispositif comprenant en outre des moyens de restriction de ladite liaison de bipasse.

Les enceintes d'alimentation et d'échappement sont des enceintes dans lesquelles transite le fluide respectivement alimentant et s'échappant du premier moteur élémentaire, lorsque ledit moteur élémentaire fonctionne pour produire un couple moteur, en étant intégré dans un circuit hydraulique.

Lorsque le moteur élémentaire est en bipasse, il ne délivre aucun couple moteur. Inversement, lorsque les moyens de restriction sont activés, si le moteur est entraîné en rotation, il exerce un couple de freinage. Par exemple, dans le cas d'un dispositif monté sur un véhicule, et dans lequel le premier moteur élémentaire est attelé à une roue, si en situation de freinage les moyens de restriction sont activés, le moteur élémentaire exerce un couple de freinage sur la roue et contribue ainsi au freinage du véhicule.

De manière générale, l'invention vise un dispositif de transmission hydrostatique comportant un premier moteur élémentaire, indépendamment de ce à quoi est attelé ce moteur, que ce soit un organe de déplacement comme une roue, un outil ou autre.

Différentes solutions ont déjà été proposées pour réaliser une restriction sur la liaison de bipasse et commander l'activation de celle-ci.

Le document FR 2 907 528 présente ainsi un dispositif dans lequel un sélecteur de liaison permet de relier les enceintes d'alimentation et d'échappement d'un moteur via une liaison de bipasse. La liaison de bipasse comporte des moyens de restriction, à savoir un réducteur de pression commandé par la pression aval. La régulation s'opère donc de manière à équilibrer la pression aval qui est celle d'une enceinte d'alimentation du moteur, et une force exercée par un ressort à tarage variable.

L'inconvénient de ce dispositif est qu'il ne permet pas de moduler le freinage, car le tarage du ressort est difficilement modifiable. En outre si le tarage du ressort est trop faible, une perte de pression trop forte s'établit dans la liaison de bipasse et il peut y avoir cavitation.

L'invention vise donc à proposer un dispositif tel que celui présenté en introduction, mais présentant une facilité de commande plus grande que celui cité précédemment, avec notamment la possibilité de modifier le couple de freinage susceptible d'être délivré par le moteur en situation de freinage.

Cet objectif est atteint grâce au fait que, lorsque le sélecteur est en position de bipasse, les moyens de restriction sont aptes à être activés pour restreindre la circulation de fluide dans la liaison de bipasse lorsqu'une pression d'échappement régnant dans l'enceinte d'échappement dépasse un seuil de restriction, ledit seuil étant fonction d'une pression de commande régnant dans une chambre de commande, et les moyens de restriction sont aptes à être désactivés pour permettre une circulation de fluide sensiblement libre dans la liaison de bipasse lorsque la pression d'échappement est inférieure audit seuil de restriction.

Lorsqu'un véhicule ou un équipement hydraulique doit freiner, c'est-à-dire être ralenti, différentes actions peuvent être menées ; celles-ci aboutissant généralement à modifier les pressions normalement établies dans les circuits hydrauliques et notamment, à provoquer des hausses de pression, et en particulier, générer des contre-pressions dans les conduites qui servent à l'échappement.

Avantageusement, le dispositif de transmission hydrostatique selon l'invention est apte à exploiter les hausses de pression se produisant lors du freinage de l'engin ou de la machine sur laquelle le dispositif est monté, pour déclencher un freinage hydrostatique - sous réserve qu'à ce moment là le rotor du moteur élémentaire soit entraîné -.

Comme l'activation des moyens de restriction dépend de la pression de commande régnant dans la chambre de commande, cette activation est facilement modulable ou contrôlable, par action sur la valeur de la pression de commande.

Le seuil de restriction désigne une pression au dessus de laquelle les moyens de restriction sont activés et induisent une restriction.

Par sélecteur de cylindrée, on entend des organes et notamment des organes de distribution de fluide qui permettent de faire changer la cylindrée du dispositif d'une valeur à une autre. En particulier, le dispositif peut comporter en plus du premier moteur élémentaire, un ou plusieurs autres moteurs élémentaires (dans un circuit de type Twin-lock par exemple). Le sélecteur de cylindrée peut agir pour bipasser un ou plusieurs de ces moteurs élémentaires et ainsi, faire varier la cylindrée du dispositif.

Avantageusement, la chambre de commande est une chambre du sélecteur de cylindrée.

Un objectif secondaire de l'invention en outre est de contrôler le couple de freinage délivré par le moteur, par exemple en de lui assignant une valeur constante. Il est notamment particulièrement intéressant de rendre le couple indépendant du débit de fluide traversant le premier moteur élémentaire, car le couple de freinage souhaité ne dépend généralement pas de ce débit.

Cet objectif est atteint grâce au fait que dans un mode de réalisation, lorsqu'ils sont activés, lesdits moyens de restriction sont aptes à réguler la pression d'alimentation du premier moteur à une pression d'équilibre fonction de la pression de commande, et plus particulièrement à une pression d'équilibre sensiblement proportionnelle à la pression de commande.

On comprend que dans ce mode de réalisation, la pression d'équilibre est indépendante du débit de fluide à travers le moteur.

La régulation de la pression d'alimentation du premier moteur peut se faire par différents moyens, et notamment en donnant une structure adaptée aux moyens de restriction de la liaison de bipasse.

Ainsi dans un mode de réalisation, les moyens de restriction comprennent :
- une portion d'équilibrage de la pression, avec des surfaces faisant face à des directions opposées s'ouvrant dans des chambres de pressions respectives la pression de commande et la pression d'alimentation ; et
- une portion de perte de charge apte à faire varier la section de passage entre les enceintes d'alimentation et d'échappement du premier moteur élémentaire ; et de plus,
les déplacements de la portion d'équilibrage commandent les mouvements de la portion de perte de charge. Dans ce but en général, ces deux portions sont fixées rigidement l'une à l'autre, ou sont deux parties d'une seule pièce.

La portion d'équilibrage est exposée à la pression de commande sur une première surface et à la pression d'alimentation sur une deuxième surface, les deux surfaces étant par exemple parallèles mais orientées dans des directions opposées. Dans une telle configuration, la pression d'équilibre s'établit à une pression valant le produit de la pression de commande par le ratio de l'aire de la première surface sur l'aire de la deuxième surface. Elle est donc proportionnelle à la pression de commande.

La régulation de la pression d'alimentation à la pression d'équilibre est faite par la portion de perte de charge, qui est agencée pour permettre l'évacuation de fluide de l'enceinte d'alimentation dès que la portion d'équilibrage se déplace en raison d'une tendance de la pression d'alimentation à dépasser la pression d'équilibre, et pour permettre l'apport de fluide dans l'enceinte d'alimentation dans le cas contraire.

Dans un mode de réalisation particulier, les moyens de restriction lorsqu'ils sont activés permettent de faire varier une section de passage de la liaison de bipasse, de telle manière qu'une augmentation de la pression d'alimentation du premier moteur tend à provoquer une diminution de cette section de passage.

Dans un mode de réalisation, le dispositif comporte en outre un distributeur de fluide, et le sélecteur est disposé à l'intérieur du distributeur sur un axe de rotation du premier moteur élémentaire. Ainsi, le dispositif peut être réalisé dans un volume réduit.

Dans un mode de réalisation, le sélecteur comporte une pièce mobile dont une surface externe constitue une paroi de la chambre de commande, la pression s'exerçant sur cette surface dans la chambre de commande étant apte à commander le déplacement de la pièce mobile provoquant ainsi un changement de cylindrée. Cette pièce mobile est par exemple un tiroir coulissant mobile en translation dans un alésage.

Avantageusement, la chambre de commande cumule donc les fonctions de chambre de commande pour l'activation et la commande de moyens de restriction, et chambre de commande pour la sélection de cylindrée. Il en résulte une économie de composants dans le dispositif.

Dans un mode de réalisation, le sélecteur comporte un corps, et les moyens de restriction sont disposés dans le corps du sélecteur. Par corps, on désigne une pièce ou un ensemble de pièces à l'intérieur desquelles sont réalisées les fonctions considérées ; par exemple dans ce cas, la fonction de sélection de cylindrée. Un corps peut être réalisé par exemple par une ou plusieurs parties de carter, et éventuellement une ou plusieurs pièces de fermeture comme des couvercles.

Le mode de réalisation cité précédemment présente avantageusement une intégration poussée, le sélecteur de cylindrée remplissant également la fonction de restriction de la liaison de bipasse. Cependant, une partie voire l'ensemble des moyens de restriction peut être disposé à l'extérieur du corps du sélecteur.

Dans un mode de réalisation, le sélecteur comporte un corps, et un tiroir coulissant disposé dans un alésage du corps de sélecteur ; et dans la chambre de commande pour la commande des moyens de restriction, la pression de commande s'applique sur le tiroir coulissant, permettant de faire passer ou non celui-ci en position de bipasse. Le passage du tiroir coulissant en position de bipasse entraine un changement de cylindrée du dispositif, du fait notamment que le moteur élémentaire est ainsi placé en position de bipasse, dans laquelle il ne délivre aucun couple moteur et présente une cylindrée nulle.

Dans un mode de réalisation, le dispositif comporte en outre une pompe principale, et le corps du sélecteur comporte au moins trois gorges ;
la première et la deuxième gorge forment respectivement, au moins en partie, l'enceinte d'échappement et l'enceinte d'alimentation du premier moteur élémentaire ;
la première gorge est apte à être reliée à un circuit d'alimentation en fluide ou d'évacuation de fluide, par exemple un orifice principal de la pompe principale ;
la deuxième gorge est apte à être reliée avec la première ou la troisième gorge respectivement dans une première et une deuxième position du tiroir du sélecteur, la première position constituant ainsi la position de bipasse ;
la troisième gorge est apte à être reliée à un circuit d'alimentation en fluide ou d'évacuation de fluide, par exemple un orifice principal de la pompe principale ; les moyens de restriction comportent une pièce de restriction mobile ;
en position de bipasse,
dans une première position de la pièce de restriction, la deuxième gorge est mise en relation avec la première gorge sensiblement sans restriction ; dans au moins une autre position, la deuxième gorge est mise en relation avec la première gorge et la pièce de restriction restreint un passage entre la première et la deuxième gorge.

Un exemple de circuit d'évacuation de fluide est un réservoir sans surpression, vers lequel le fluide est évacué en général via un limiteur de pression comme un clapet taré.

Suivant la position prise par la pièce de restriction, la restriction opérée sur le passage entre la première et la deuxième gorge est plus ou moins grande.

Dans un mode de réalisation, le dispositif présente en outre un deuxième moteur élémentaire présentant des enceintes d'échappement et d'alimentation formées respectivement, au moins en partie, par la première et la troisième gorge. Les deux moteurs élémentaires peuvent ainsi être exploités dans deux cylindrées différentes, suivant que la liaison de bipasse est ouverte ou non.

Dans un mode de réalisation, le dispositif présente en outre un deuxième moteur élémentaire comportant une enceinte d'échappement formée au moins en partie par la première gorge, et une enceinte d'alimentation, celle-ci étant apte à être mise en relation avec un circuit d'alimentation en fluide ou d'évacuation de fluide par des moyens additionnels de sélection de cylindrée. Les moyens additionnels de sélection de cylindrée peuvent être ou non disposés dans le sélecteur. Notamment, ils peuvent être un deuxième sélecteur de cylindrée du dispositif, distinct du premier sélecteur.

Dans un mode de réalisation, les deux moteurs élémentaires font partie d'un même moteur hydraulique et sont aptes à entraîner un même organe de sortie de celui-ci. De manière générale, dans de nombreux cas le dispositif peut être entièrement agencé dans un moteur hydraulique commun dès lors que les différents moteurs élémentaires intégrés au dispositif peuvent être intégrés à ce moteur commun. Dans ce cas, le dispositif est intégré à l'intérieur du carter du moteur commun, grâce à quoi avantageusement il est particulièrement compact.

Dans un mode de réalisation, la pièce de restriction :
- est sollicitée dans des sens opposés par la pression de commande et la pression d'alimentation ;
- se déplace dans un premier sens et réduit une section dudit passage lorsque la pression d'alimentation tend à augmenter au dessus de la pression d'équilibre ; et
- se déplace dans un deuxième sens et augmente ladite section dudit passage dans le cas contraire,
grâce à quoi elle permet de réguler la pression d'alimentation à la pression d'équilibre.

Dans un mode de réalisation, la pièce de restriction comporte une douille coulissante disposée dans l'alésage, ladite douille permettant, en fonction de sa position relative par rapport aux gorges, d'obturer partiellement ledit passage entre la première et la deuxième gorge. La douille se caractérise notamment par sa surface externe cylindrique (au moins partiellement), apte à être mise en contact sensiblement étanche avec la surface interne de l'alésage dans laquelle elle coulisse.

Dans un mode de réalisation, la douille et le tiroir présentent des surfaces concentriques et sont disposés sur un axe de l'alésage du sélecteur. Ce mode de réalisation permet une fabrication à coût réduit de la douille et du sélecteur, du fait de la simplicité d'usinage ou de tournage des surfaces cylindriques.

Dans un mode de réalisation, le dispositif comporte en outre des moyens pour faire varier la pression de commande. Ces moyens peuvent être conçus pour faire varier la pression de commande continûment, ou en mode tout-ou-rien. Dans un mode de réalisation, ces moyens comprennent une valve d'activation interposée sur la liaison entre la source auxiliaire et la chambre de commande, cette valve présentant une position d'activation dans laquelle elle relie ladite pompe et ladite chambre, et une position de désactivation dans laquelle ladite chambre est mise en relation avec un réservoir sans surpression.

Dans un mode de réalisation, la chambre de commande est apte à être reliée à une source auxiliaire de fluide sous pression telle qu'une pompe de gavage du dispositif. Comme la pompe de gavage se trouve ainsi elle-même reliée à la chambre de commande, et agit ainsi sur la sélection de cylindrée et la régulation de la restriction dans la liaison de bipasse, il s'ensuit que la pression dans la chambre de commande et dans certaines enceintes est liée à la pression de gavage. Par conséquent, cette configuration assure que la pression dans la chambre de commande et ces enceintes est suffisante pour éviter la cavitation.

L'invention sera bien comprise et ses avantages apparaîtront mieux à la lecture de la description détaillée qui suit, de modes de réalisation représentés à titre d'exemples non limitatifs. La description se réfère aux dessins annexés, sur lesquels :
- la figure 1 est une vue schématique d'un dispositif de transmission hydrostatique selon l'invention dans un premier mode de réalisation, configuré dans une première cylindrée, en marche avant ;
- la figure 2 est une vue schématique du dispositif de la figure 1, configuré dans une deuxième cylindrée, en marche avant normale ;
- la figure 3 est une vue schématique du dispositif de la figure 1, configuré dans la deuxième cylindrée, en marche avant mais en situation de freinage ;
- la figure 4 est une section longitudinale d'un dispositif de transmission hydrostatique selon l'invention, dans un deuxième mode de réalisation ;
- la figure 5 est une section transversale du dispositif de la figure 4 ;
- la figure 6 est une section longitudinale partielle du dispositif de la figure 4, dans une première cylindrée ;
- la figure 7 est une section longitudinale partielle du dispositif de la figure 4, dans une deuxième cylindrée ;
- la figure 8 est une section longitudinale partielle du dispositif de la figure 4, dans une configuration de bipasse ;
- la figure 9 est une section longitudinale partielle du dispositif de la figure 4, dans une troisième cylindrée, en marche avant normale ;
- la figure 10 est une section partielle du dispositif de la figure 4, dans la troisième cylindrée, en marche avant mais en situation de freinage ; et
- la figure 11 est une section d'un dispositif de transmission hydrostatique selon l'invention, dans un troisième mode de réalisation.

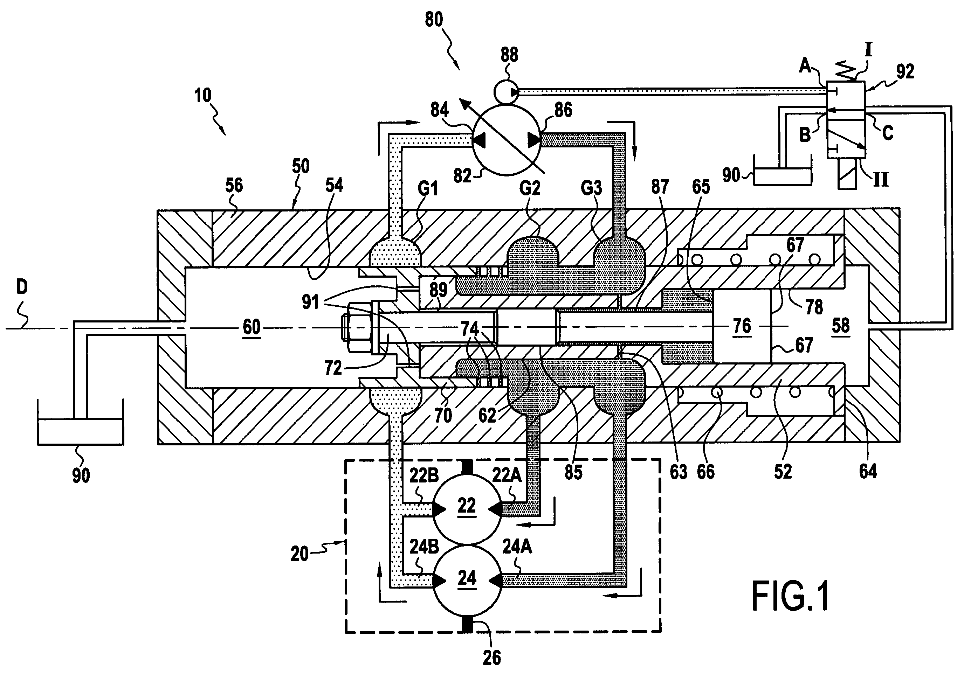

La figure 1 présente un dispositif de transmission hydrostatique selon l'invention dans un premier mode de réalisation.

Ce dispositif 10 comporte :
- un moteur hydraulique 20, comprenant un premier moteur élémentaire 22 et un deuxième moteur élémentaire 24, tous deux attelés à un même arbre de sortie 26 ;
- un sélecteur de cylindrée 50 comprenant une pièce mobile ou tiroir coulissant 52 apte à coulisser dans un alésage 54 d'un corps 56 du sélecteur ;
- une pompe 80 comprenant une pompe principale 82 ayant deux orifices principaux 84 et 86, et une pompe de gavage 88 jumelée à la pompe principale ;
- un réservoir sans surpression 90, c'est-à-dire sensiblement à la pression atmosphérique ;
- une valve d'activation 92.

La position adoptée par le sélecteur de cylindrée 50 détermine le mode de fonctionnement du dispositif.

Dans le corps 56 du sélecteur, le tiroir coulissant 52 est mobile entre deux chambres situées aux extrémités de l'alésage : une chambre de commande 58 et une chambre dite « chambre basse » 60 dans laquelle règne une basse pression, cette chambre basse 60 étant reliée au réservoir sans surpression 90.

La chambre de commande 58 est reliée à une voie C de la valve d'activation 92. La valve 92 est une électrovalve comportant un tiroir mobile entre une première position I et une deuxième position II. Un ressort tend à maintenir la valve 92 en première position.

La valve 92 présente en outre deux autres voies A et B reliées respectivement à l'orifice de refoulement de la pompe de gavage 88, et au réservoir sans surpression 90.

En première position I, les voies B et C sont reliées et la voie A isolée, ce qui permet de relier la chambre 58 au réservoir 90.

En deuxième position II, les voies A et C sont reliées et la voie B est isolée, ce qui permet de relier la chambre 58 à la pompe de gavage.

Ainsi, la valve d'activation permet de commander la pression dans la chambre de commande 58.

Le tiroir coulissant 52 a une forme générale de barreau cylindrique, de diamètre extérieur sensiblement égal à celui de l'alésage 54. Sa surface cylindrique externe comporte une gorge circonférentielle 62, ayant une certaine longueur suivant l'axe D de l'alésage 54 et du tiroir 52.

L'alésage 54 comporte pour sa part trois gorges circonférentielles G1, G2 et G3 disjointes deux à deux et échelonnées suivant l'axe D.

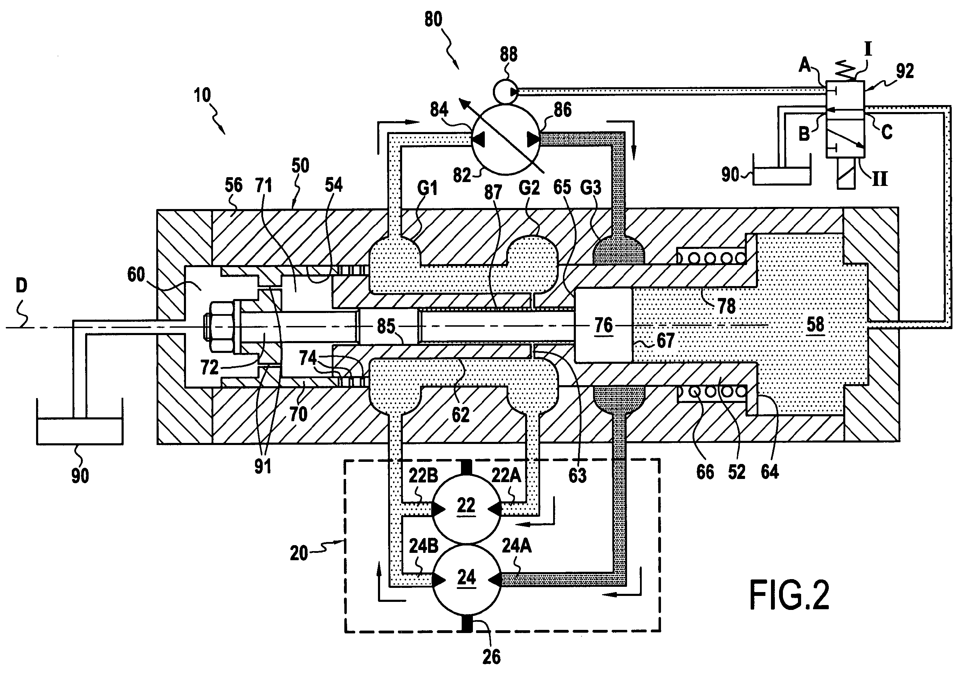

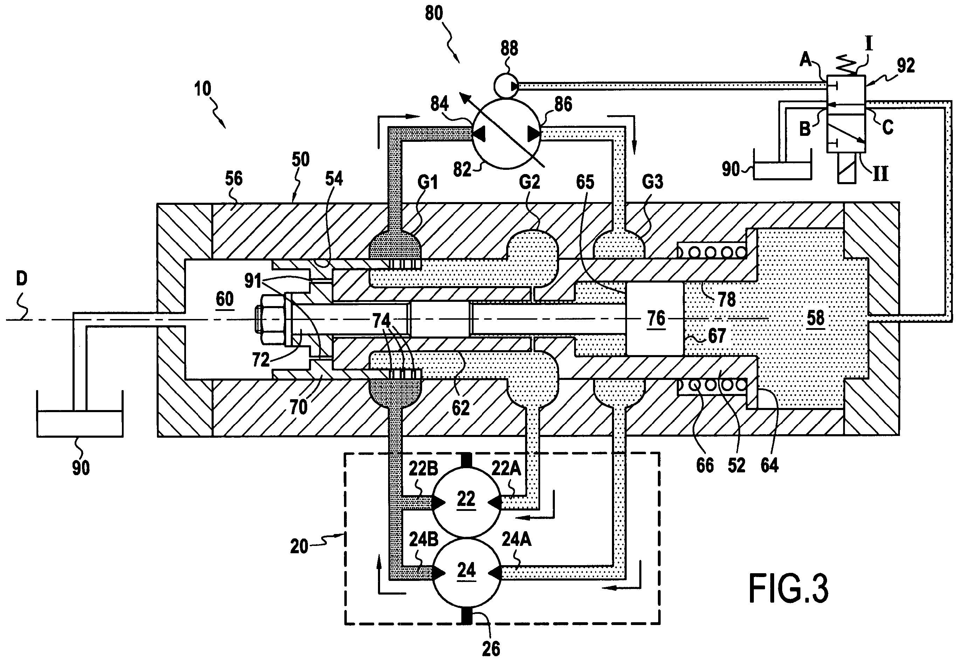

Le tiroir 52 peut être placé dans une première position (fig. 1), dans laquelle la gorge 62 relie les gorges G2 et G3 de l'alésage ; ou dans une deuxième position (fig. 2 et 3), dans laquelle la gorge 62 permet de relier les gorges G1 et G2.

La première gorge G1 est reliée au premier orifice 84 de la pompe 82 ; la troisième gorge G3, au deuxième orifice 86. Le tiroir coulissant 52 comporte en outre un épaulement 64. Des moyens de rappel, à savoir un ressort 66, tendent à maintenir et/ou rappeler le tiroir coulissant 52 dans sa première position illustrée sur la figure 1.

Inversement, le tiroir coulissant 52 est entraîné vers sa deuxième position par la pression régnant dans la chambre de commande 58 et s'exerçant sur le tiroir, directement ou indirectement.

En fonction de la position de la valve d'activation 92, la pression dans la chambre de commande 58 est soit nulle (pression du réservoir sans surpression 90, c'est-à-dire pression atmosphérique), soit égale à la pression de gavage, c'est-à-dire la pression à l'orifice de refoulement de la pompe de gavage 88. Dans le premier cas (pression atmosphérique dans la chambre 58), le tiroir 52 prend sa première position ; dans le second, il prend la deuxième position dite position activée.

La figure 1 représente, au moyen de flèches le long des principales conduites du dispositif 10, le sens de circulation du fluide dans le mode de fonctionnement représenté. Ce mode de fonctionnement est un mode de fonctionnement normal du circuit, dans lequel les deux moteurs élémentaires 22 et 24 sont actifs simultanément. Ce mode est dit "de grande cylindrée". Un mode de fonctionnement est dit normal lorsque le moteur joue un rôle moteur (et non un rôle de frein, notamment).

Les moteurs élémentaires 22 et 24 comportent chacun respectivement une enceinte d'alimentation 22A, 24A par lesquelles ils reçoivent du fluide, et une enceinte d'échappement 22B, 24B par lesquelles ils évacuent du fluide.

Les enceintes d'échappement 22B et 24B sont formées toutes les deux en partie par la première gorge G1.

L'enceinte d'alimentation 22A du premier moteur 22 est formée en partie par la deuxième gorge G2 ; celle 24A du deuxième moteur 24 est formée en partie par la troisième gorge G3.

Dans les phrases précédentes, le terme 'en partie' se justifie par le fait que les enceintes citées comportent non seulement la gorge indiquée, mais aussi notamment des surfaces en regard, qui peuvent dépendre de la configuration adoptée par le sélecteur 50. Ces surfaces en regard peuvent être par exemple une partie de la surface circonférentielle externe du tiroir 52.

Dans le mode de fonctionnement représenté en figure 1, les moteurs 22 et 24 délivrent un couple moteur via l'arbre de sortie 26 auquel ils sont attelés. Ce couple moteur s'applique à un organe de déplacement (une roue) de l'engin non représenté sur lequel le dispositif 10 est monté. Une pression relativement élevée, dite haute pression de la pompe, règne dans les enceintes d'alimentation 22A, 24A des moteurs, alors qu'une pression relativement basse règne dans les enceintes d'échappement 22B, 24B.

Les figures 2 et 3 représentent un deuxième mode de fonctionnement du dispositif 10. Ce deuxième mode de fonctionnement se caractérise par le fait que le moteur 22 est mis en bipasse et ainsi désactivé, seul le moteur 24 restant actif et délivrant un couple moteur. Ce mode est donc dit de "petite cylindrée".

Pour passer dans ce mode de fonctionnement, à partir du mode de grande cylindrée (figure 1), il suffit de faire passer la valve 92 de la position I à la position II, ce qui actionne le sélecteur de cylindrée 50.

En effet, cette action fait passer la pression dans la chambre de commande 58 de la pression "nulle" (pression atmosphérique) à la pression de gavage. La pression de gavage s'exerçant sur l'épaulement 64 du tiroir 52 (notamment) applique sur le tiroir 51 une force supérieure aux forces de rappel du ressort 66. Aussi le tiroir 52 passe en deuxième position, illustrée par les figures 2 et 3.

Le sens de parcours du fluide est identique dans ce mode de fonctionnement, à celui constaté en "grande cylindrée".

La figure 2 illustre le fonctionnement normal du dispositif, c'est-à-dire lorsque le moteur - dans ce cas, seulement le moteur élémentaire 24 -, délivre un couple moteur.

Dans ce régime la haute pression de la pompe s'applique seulement à l'enceinte d'alimentation 24A du deuxième moteur élémentaire 24. L'enceinte d'alimentation 22A du premier moteur élémentaire et les deux enceintes d'échappement 22B et 24B sont portées à la basse pression de la pompe 82, régnant à l'orifice d'admission 84 de celle-ci.

En particulier, les deux enceintes 22A et 22B du moteur 22 sont mises en relation, entre la première gorge G1 et la deuxième gorge G2, via la gorge 62 du tiroir coulissant 52. Une liaison de bipasse est ainsi constituée par la gorge 62 entre les deux enceintes 22A et 22B. En fonctionnement normal (figure 2), cette liaison ne fait apparaître aucune restriction, et le fluide peut circuler librement entre les enceintes.

La figure 3 présente le fonctionnement du dispositif lorsque celui-ci est utilisé pour réaliser un freinage hydrostatique.

Un tel freinage a lieu à partir d'une situation de marche normale du véhicule telle que celle de la figure 2. Pour une raison quelconque, le conducteur du véhicule veut freiner l'engin sur lequel le dispositif 10 est monté.

La première action consiste à réduire le débit de la pompe principale 84. Etant donnée l'inertie du véhicule, la vitesse de celui-ci varie relativement lentement. Par conséquent, la réduction du débit de la pompe entraine immédiatement une baisse de pression à l'orifice 86 de refoulement de la pompe et une forte hausse de pression à son orifice d'admission 84.

Cette différence de pression s'appliquant entre les enceintes d'alimentation et d'échappement du second moteur 24 entraîne que celui-ci délivre un couple de freinage.

Par ailleurs, dans le but de permettre également au premier moteur élémentaire de délivrer un couple de freinage, des moyens de restriction sont disposés dans l'alésage 54.

Ces moyens comportent essentiellement une douille 70 et un tirant 72, tous deux étant agencés coaxialement sur l'axe D. La douille a une forme générale de manchon, dont le diamètre extérieur est sensiblement égal à celui de l'alésage 54, et présente une surface externe concentrique avec des surfaces du tirant 72 et l'alésage 54 du tiroir 52.

L'extrémité de la douille 70 disposée du côté de la chambre de commande 58 comporte des passages radiaux 74, aptes à permettre le passage de fluide entre l'extérieur de la douille et son espace intérieur 71, espace intérieur dans lequel passe l'extrémité du tiroir 52 qui est du côté de la chambre basse, et notamment dans lequel se trouve une partie de la gorge 62 lorsque le sélecteur est en position activée, c'est-à-dire lorsque le tiroir 52 est dans sa deuxième position.

Les passages radiaux 74 sont formés seulement sur le côté de la douille qui se trouve du côté de la chambre de commande 58.

La douille 70 peut se positionner dans différentes positions :
- Une première position est représentée sur la figure 1. La douille est positionnée au droit de la gorge G1, mais de telle manière qu'aucun passage 74 ne soit positionné au droit de cette gorge. La douille 70 empêche alors tout passage de fluide entre la gorge 62 du tiroir 52 et la gorge G1, et donc avec les enceintes d'échappement 22B et 24B des moteurs 22 et 24.
- La douille peut également être déplacée suivant l'axe D pour occuper différentes positions axialement différentes dans lesquelles un ou plusieurs passages 74 se trouvent au droit de la gorge G1 (figure 3). En fonction du nombre de passages 74 placés en regard de cette gorge, la douille 70 restreint plus ou moins le passage entre la première gorge G1 et la deuxième gorge G2 via la gorge 62 (liaison de bipasse).
- En particulier, dans une position de déplacement maximal vers la chambre basse 60, la douille est complètement dégagée de la gorge 62, et permet donc un libre passage du fluide à travers la gorge 62, de la première à la deuxième gorge (figure 2).

La position de la douille 70 est commandée par une portion d'équilibrage 76 en forme de piston qui est une partie du tirant 72. En effet, la douille 70 et la portion d'équilibrage 76 sont fixées l'une à l'autre aux extrémités du tirant 72, et plus précisément de part et d'autre de la partie centrale du tirant. Cette partie centrale du tirant est de forme extérieure sensiblement cylindrique, et s'étend dans un passage axial interne 78 du tiroir 52.

Le diamètre de la partie centrale du tirant 72 est strictement inférieur à celui du passage 78. Par ailleurs, la partie centrale comporte un épaulement central 85, qui coulisse de manière sensiblement étanche dans le passage 78. Cet épaulement 85 divise donc l'espace intérieur au passage 78, en deux parties :
- Entre l'épaulement central 85 et la portion d'équilibrage 76 (qui elle-même coulisse également de manière sensiblement étanche dans l'alésage 78) est formée une chambre 87 ;
- Entre l'épaulement central 85 et la douille 70 est formée une chambre 89.

Des perçages radiaux 63 sont aménagés dans la gorge 62 pour relier celle-ci avec la chambre 87. Aussi, la pression régnant dans la gorge 62 s'exerce dans la chambre 87. Elle s'exerce donc notamment sur la face 65 de la portion d'équilibrage 76 qui est située du côté de la douille par rapport à la portion 76.

Du côté opposé à la face 65, la portion d'équilibrage 76 comporte une face 67, qui fait face à la chambre de commande 58.

Aussi, la portion d'équilibrage 76 est soumise aux effets antagonistes de la pression de commande (dans la chambre 58), agissant sur la face 67, et de la pression dans la gorge 62 s'exerçant sur la face 65.

Lorsque cette pression dans la gorge 62 augmente, cela induit un accroissement de la force s'appliquant sur la portion d'équilibrage 76 et tend à déplacer cette dernière vers la chambre de commande 58 (vers la droite sur la figure 3) ; cela tend donc à déplacer la douille 70 dans le même sens, ce qui tend donc à augmenter la restriction sur la liaison de bipasse en réduisant le nombre de passages 74 faisant communiquer la gorge G1 avec la gorge 62.

Par ailleurs, pour permettre un déplacement indépendant du tiroir 52 par rapport à la douille 70, des passages 91 sont aménagés entre la chambre basse 60 et l'espace intérieur 71 de la douille 70, lui-même relié à la chambre 89.

Enfin, on note que la douille 70 et le tirant 72 peuvent ne constituer qu'une pièce unique, étant solidaires l'une de l'autre.

Le fonctionnement du sélecteur de cylindrée 50 est le suivant.

Lorsque la valve d'activation 92 est placée en position I, la pression dans la chambre 58 est la pression atmosphérique. Sous l'effet du ressort 66, le tiroir 52 se déplace en première position, vers la chambre 58. Ainsi, les gorges G2 et G3 communiquent et sont reliées à l'orifice 86 de la pompe.

Par ailleurs, la portion d'équilibrage 76 est soumise à une pression de commande faible (la pression atmosphérique) s'opposant à une pression élevée (pression de refoulement de la pompe 82) s'exerçant respectivement sur ses faces 67 et 65. Aussi, la portion d'équilibrage 76 se déplace vers la chambre de commande et par conséquent, la douille 70 se positionne de manière à isoler la gorge G1, et notamment à l'isoler des gorges G2 et G3.

Ainsi, les deux moteurs 22 et 24 sont actifs.

Lorsque la valve d'activation 92 est placée en position II, le tiroir 52 se positionne en deuxième position en s'éloignant de la chambre de commande 58, position dans laquelle il isole la gorge G3.

Dans cette position du tiroir 52, le comportement de la douille 70, entrainée par le tirant 72, dépend de la pression d'échappement du premier moteur 22, c'est-à-dire de la pression dans la gorge G1.

En dessous d'une certaine valeur dite seuil de restriction, la pression s'exerçant sur la face 65 de la portion d'équilibrage 76, qui est la pression dans l'enceinte d'échappement du premier moteur 22, n'est pas suffisante pour surmonter la force engendrée par la pression de commande s'exerçant sur la face 67. Aussi, la douille 70 reste en première position (vers la gauche, comme sur la figure 2), et la liaison de bipasse reste libre et non restreinte.

Au-dessus du seuil de restriction inversement, la douille 70 se déplace, tirée par la portion d'équilibrage 76 via le tirant 72 en direction de la chambre d'équilibrage 58.

L'agencement de la portion d'équilibrage 76, du tiroir 52, de la douille 70 et du corps 56, permet qu'une régulation se réalise et maintienne une pression d'équilibre dans la gorge G2 et donc dans l'enceinte d'alimentation 22A du premier moteur.

Cette pression est principalement fonction des surfaces respectives sur lesquelles s'appliquent les pressions d'alimentation et de commande, notamment de part et d'autre de la portion d'équilibrage 76.

Dans l'exemple présenté, elle est proportionnelle à la pression de commande, le coefficient de proportionnalité étant sensiblement égal au ratio des surfaces mouillées (65 et 67) de la portion d'équilibrage.

De préférence, la pression d'équilibre est suffisante pour éviter toute cavitation dans les moteurs 22 et 24.

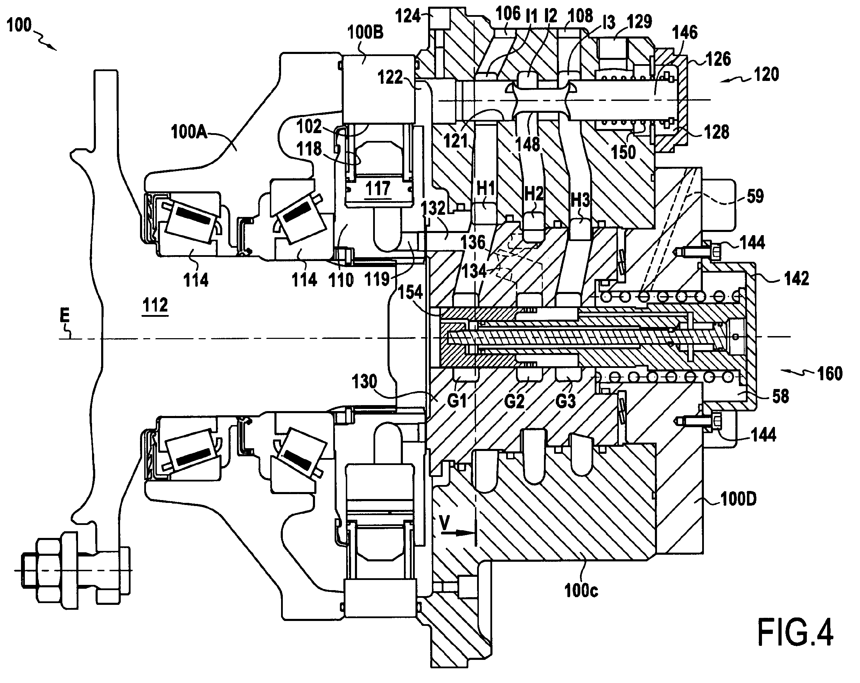

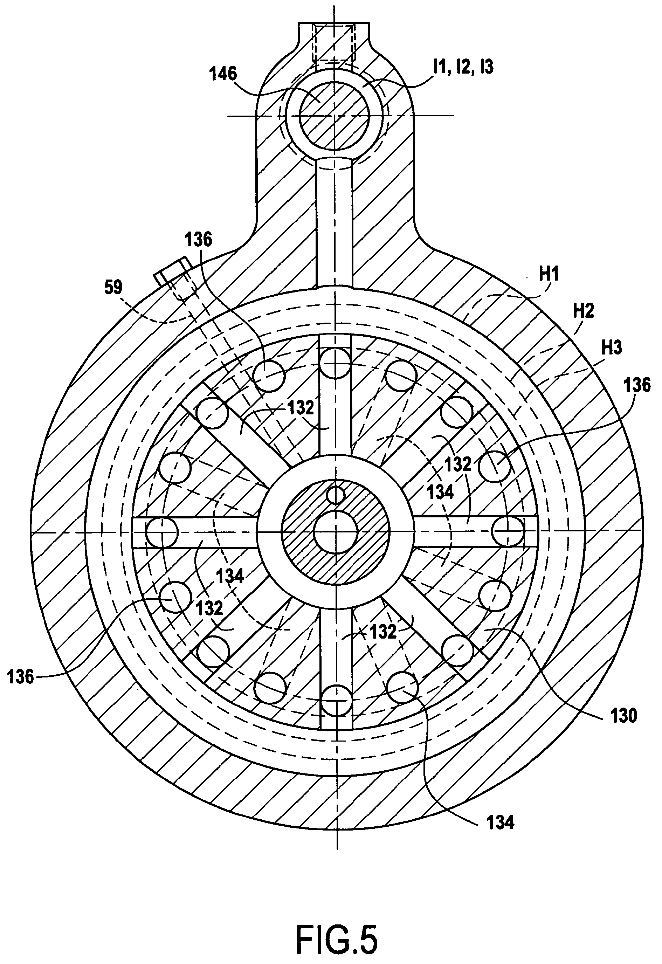

Les figures 4 à 10 présentent un dispositif selon l'invention dans un deuxième mode de réalisation.

Par souci de simplicité, les mêmes références seront conservées pour les pièces ou éléments sensiblement identiques dans leur forme ou leur fonction à celles ou ceux du premier mode de réalisation de l'invention.

Le dispositif de transmission hydrostatique 100 est constitué essentiellement par un moteur 100 qui comporte un carter en quatre parties 100A, 100B, 100C et 100D, à l'intérieur duquel est monté rotatif un bloc-cylindres 110, apte à entraîner en rotation un arbre 112, supporté par rapport à la partie 100A du carter par des paliers 114. Les parties de carter 100A, 100B et 100C sont fixées ensemble par des vis non représentées.

Le moteur 100 comporte également un distributeur interne 130, monté fixe à l'intérieur de la partie de carter 100C.

Dans le bloc-cylindres 110 sont formés des cylindres 118 dans lesquels coulissent des pistons 117. Les pistons 117 sont en appui contre la came ondulée 102 formée sur la périphérie interne de la partie 100B du carter. Bien que le type de moteur représenté soit à carter fixe et arbre tournant, l'invention s'applique également aux moteurs à carter tournant.

A travers le bloc-cylindres 110 passent des conduits de cylindre 119, aptes à relier les cylindres 117 avec des conduits de distribution 132, 134 et 136 ouverts dans le distributeur 130.

Le carter 100C abrite la partie de distribution de fluide du moteur 100. Pour cela, il comporte deux raccords externes 106 et 108 aptes à être reliés aux orifices principaux d'une pompe.

Il comporte également un premier sélecteur de cylindrée 120, disposé dans un alésage 121 de la partie de carter 100C. Une première extrémité de l'alésage est ouverte sur la chambre interne 122 dans laquelle est disposé le bloc-cylindres ; et est reliée en outre via un raccord externe 124 à un réservoir sans surpression non représenté.

La deuxième extrémité de l'alésage 121 abritant le sélecteur 120 débouche sur une face externe de la partie de carter 100C opposée à la partie de carter 100B, et est fermée par un bouchon 126.

Cette deuxième extrémité forme une chambre de commande hydraulique 128, reliée à l'extérieur du moteur via un raccord externe 129. L'alésage 121 comporte trois gorges I1, I2 et I3. Les gorges I1 et I3 sont reliées respectivement aux raccords 106 et 108.

Dans l'alésage 121 est monté un tiroir coulissant 146 de forme extérieure sensiblement cylindrique.

Ce tiroir coulissant 146 comporte une gorge circonférentielle 148. Le tiroir 146 peut se déplacer entre deux positions sous les effets de la pression dans la chambre de commande 128, et de la force antagoniste exercée par un ressort 150 disposé dans cette même chambre. Dans une première position dite activée, qu'il adopte lorsqu'une pression suffisante règne dans la chambre 128, le tiroir 146 relie les gorges I1 et I2 ; dans une deuxième position qu'il adopte lorsqu'une pression plus faible règne dans la chambre 128, il relie les gorges I2 et I3.

Le carter 100C abrite également un deuxième sélecteur de cylindrée 160 disposé sur l'axe de rotation E du moteur à l'intérieur d'un alésage 154 du distributeur 130. La structure interne de ce sélecteur 160 et son fonctionnement sont identiques à ceux du sélecteur présenté en relation avec les figures 1 à 3 ; seuls les éléments spécifiques au sélecteur 160 seront donc décrits ici.

Le distributeur 130 comporte trois gorges circonférentielles G1, G2 et G3 formées dans son alésage interne 154. Il comporte également trois gorges circonférentielles externes H1, H2 et H3. Des liaisons aménagées dans la partie de carter 100C relient respectivement la gorge I1 à la gorge H1, la gorge I2 à la gorge H2, la gorge I3 à la gorge H3.

Des liaisons aménagées dans le distributeur 130 relient la gorge H1 à la gorge G1, et la gorge H3 à la gorge G3.

Les différents conduits de distribution 132, 134, 136 sont respectivement reliés aux gorges G1, G2 et H2. Dans le distributeur 130, les conduits de distribution sont agencés autour de l'axe de rotation E de la manière suivante : Cinq conduits 134 sont reliés à la gorge G2 et forment avec celle-ci l'enceinte d'alimentation d'un premier moteur élémentaire 1A du moteur 100 ; trois conduits 136 sont reliés à la gorge H2 et forment avec celle-ci l'enceinte d'alimentation d'un deuxième moteur élémentaire 1B. Enfin, les conduits 132 avec la gorge G1 constituent l'enceinte d'échappement unique commune aux moteurs élémentaires 1A et 1B.

Le sélecteur 160 est agencé dans un corps en trois parties, à savoir le distributeur 130, la partie de carter 100D et un couvercle 142, ce dernier étant fixé sur la partie de carter 100D par des vis 144.

Le sélecteur 160 comporte une chambre de commande 58 située dans l'alésage 154 de la partie de carter 100D. La chambre 58 est fermée à ses deux extrémités : du côté du moteur, par des surfaces du distributeur 130, du tiroir coulissant 52, et par une face 67 du piston d'équilibrage 76 du tirant 72 ; et à l'autre extrémité par le couvercle 142. On constate donc que la pression dans la chambre 58 permet d'agir à la fois sur le tiroir coulissant 52, et sur le tirant 72 via son piston d'équilibrage 76.

La chambre de commande 58 communique avec l'extrémité du moteur via une conduite de liaison 59, ce qui permet de contrôler la pression dans la chambre.

On suppose dans ce qui suit le moteur 100 relié respectivement à l'orifice de refoulement d'une pompe principale par son raccord 106 (ainsi soumis à une haute pression en régime normal) et à l'orifice d'admission de cette pompe par son raccord 108 (ainsi soumis à une basse pression en régime normal).

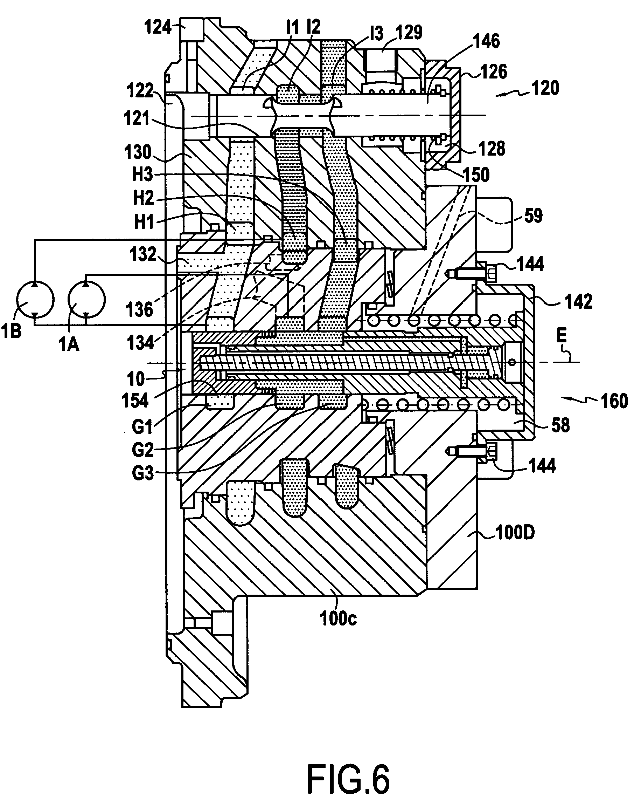

Les principaux modes de fonctionnement du moteur 100 sont les suivants en régime normal :
Dans un premier mode (figure 6) correspondant à une première cylindrée, une basse pression est appliquée dans les chambres 128 et 58.

Par suite, les tiroirs 146 et 52 se déplacent vers la droite sous l'effet des ressorts 150 et 66 respectivement (Les directions sont données par référence aux figures 6 à 10). Dans le sélecteur 120, les gorges I2 et I3 sont mises en communication ; dans le sélecteur 160, les gorges G1 et G3 sont mises en communication.

Dans le moteur 100, les deux moteurs 1A et 1B sont donc soumis à une haute pression dans leur enceinte d'alimentation, et une basse pression dans leur enceinte d'échappement, et ainsi sont tous deux actifs et délivrent un couple moteur dans ce mode de fonctionnement.

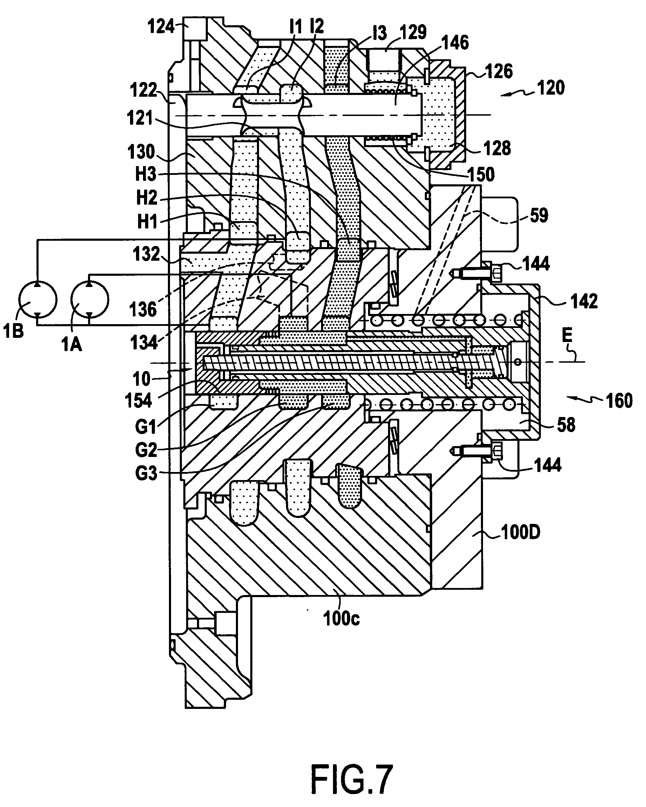

Dans un deuxième mode de fonctionnement (figure 7) une haute pression est appliquée dans la chambre 128, et une basse pression dans la chambre 58.

On comprend que les pressions haute et basse indiquées sont choisies, notamment en fonction des ressorts 150 et 66, de manière à mettre en position respectivement activée ou non activée les sélecteurs 120 et 160.

Dans ce mode de fonctionnement, le tiroir 146 du sélecteur 120 se positionne sur la gauche et les gorges I1 et I2 sont mises en communication. Le sélecteur 160 met en communication les gorges G2 et G3.

Aussi, le moteur 1A est actif et délivre un couple moteur, alors que le moteur 1B est bipasse, son enceinte d'alimentation (gorge H2) étant comme son enceinte d'échappement (gorge G1) portée à la basse pression.

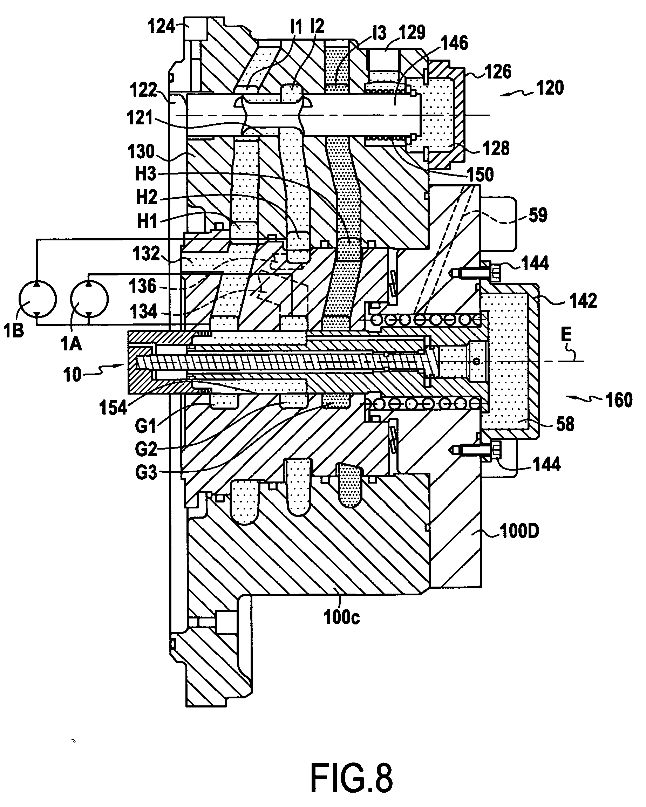

Dans un troisième mode de fonctionnement (figure 8), une haute pression est appliquée dans les deux chambres 128 et 58. Le tiroir 146 se positionne sur la gauche dans le sélecteur 120. Les gorges I1 et I2 sont mises en communication. Le sélecteur 160 met en communication les gorges G1 et G2.

Dans ce mode, les deux moteurs 1A et 1B sont en bipasse, leurs enceintes d'alimentation (gorges G2 et H2) étant mises en relation avec leur enceinte d'échappement commune (gorge G1).

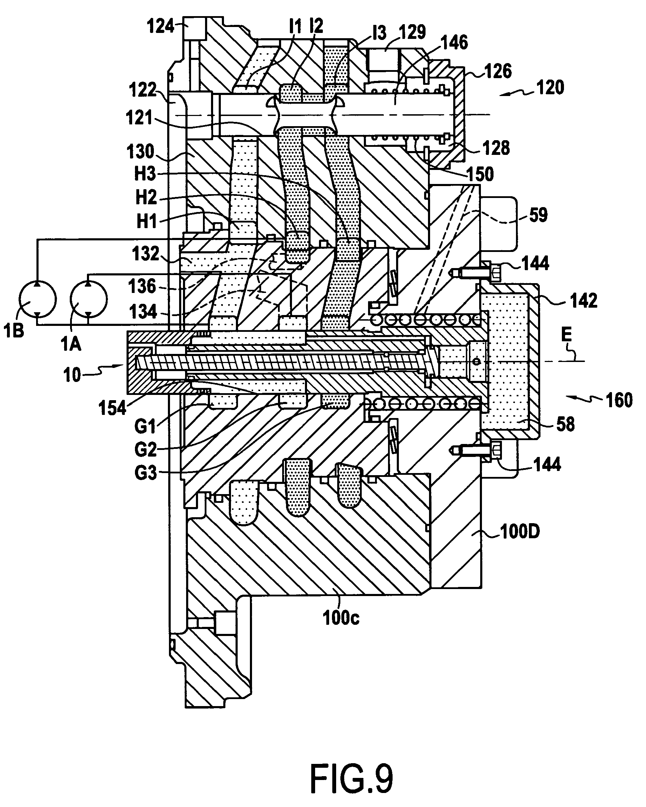

Dans un quatrième mode de fonctionnement (figure 9), une basse pression est appliquée dans la chambre 128, et une haute pression dans la chambre 58. Aussi, le tiroir 146 se positionne sur la droite dans le sélecteur 120. Les gorges I2 et I3 sont mises en communication. Le sélecteur 160 met en communication les gorges G1 et G2.

Dans ce mode, le moteur 1B est actif, alors que le moteur 1A est en bipasse. Les moteurs 1A et 1B ayant des cylindrées différentes, ce quatrième mode de fonctionnement permet d'opérer le moteur avec une cylindrée différente de celle mise en oeuvre dans le deuxième mode de fonctionnement.

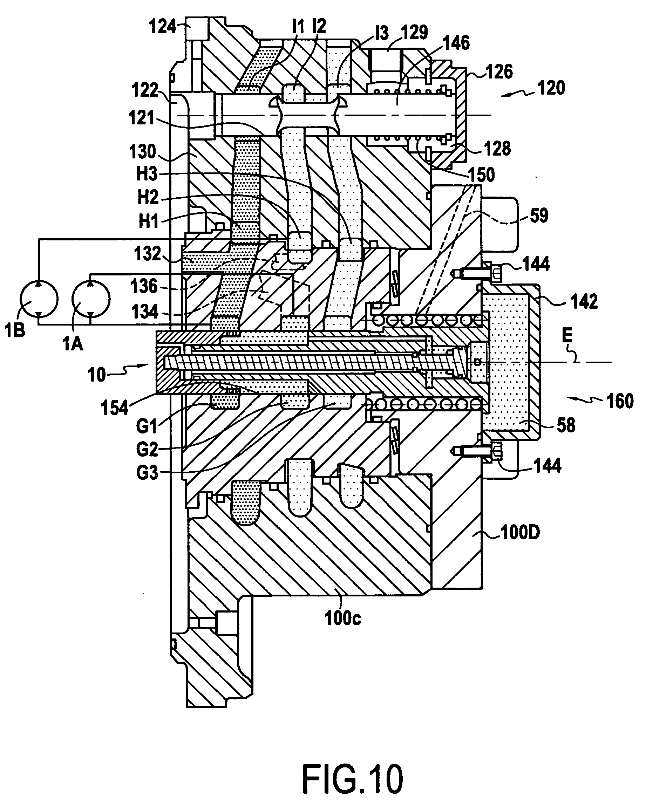

Alors que les quatre modes de fonctionnement précédents correspondent au fonctionnement normal du moteur, un mode de fonctionnement spécifique va maintenant être décrit (figure 10) : c'est le fonctionnement du moteur pendant une phase de freinage, et plus particulièrement, le freinage effectué alors que le moteur est exploité dans son quatrième mode de fonctionnement.

Lorsque l'on effectue un tel freinage, les pressions dans le moteur 100 changent considérablement.

Tout d'abord, les pressions aux orifices de la pompe s'inversent. Ainsi, une haute pression s'applique dans le raccord 108, et une basse pression dans le raccord 106.

Du fait de cette inversion, qui s'applique dans ses enceintes d'alimentation et d'échappement, le deuxième moteur élémentaire 1B devient un frein et délivre un couple de freinage sur l'arbre de sortie 12.

Le comportement du premier moteur élémentaire 1A quant à lui dépend de la pression de commande appliquée dans la chambre 58.

Si la pression dans l'enceinte d'échappement (gorge G1) excède une certaine pression dite seuil de restriction, les moyens de restriction constitués par la douille 70 associée au tirant 72 s'activent : ils se déplacent vers la droite, de telle sorte que la douille vient partiellement obstruer le passage de communication entre les gorges G1 et G2.

Il s'ensuit qu'une pression intermédiaire s'établit dans la gorge G2, et qu'ainsi, le moteur élémentaire 1A délivre un couple de freinage. Avantageusement, la valeur du couple de freinage est constante dès lors qu'une pression de commande constante est appliquée, puisqu'elle ne dépend que de la pression de commande appliquée dans la chambre 58.

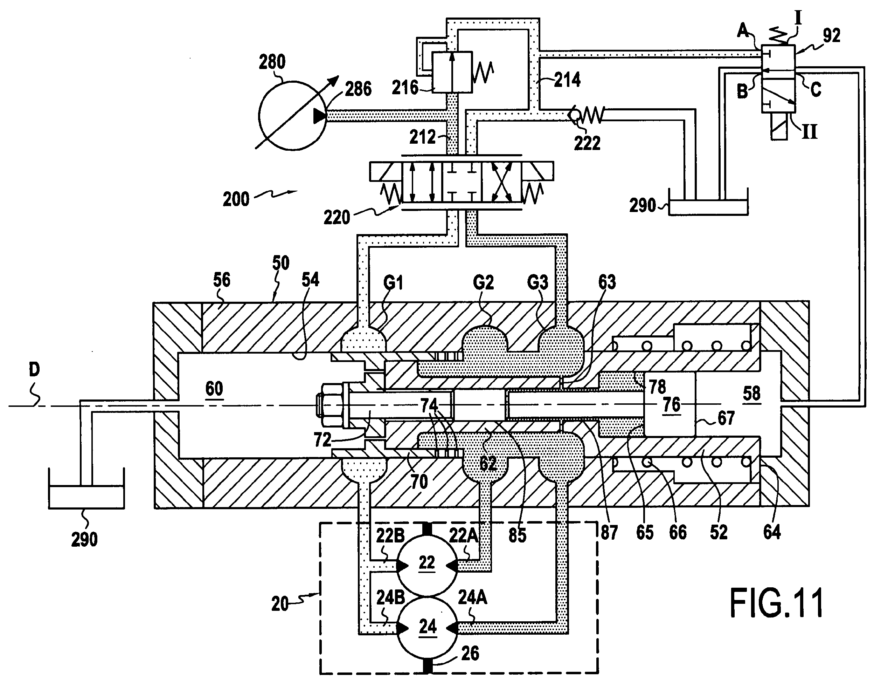

La figure 11 présente un troisième mode de réalisation de l'invention, dans lequel la pompe principale est exploitée en circuit ouvert.

A l'exception de la pompe et du circuit de distribution de fluide entre la pompe, le sélecteur 50, et le réservoir sans surpression (290), le dispositif de transmission hydrostatique 200 schématisé sur la figure 11 est identique au dispositif 10 de la figure 1.

Les différences sont les suivantes :
La pompe 280 est une pompe à débit variable qui pompe le fluide depuis un réservoir sans surpression 290 (conduit non représenté) et le refoule à son orifice de refoulement 286, dans une première conduite 212.

Une deuxième conduite 214 est reliée à la première conduite 212 via un réducteur de pression 216 ; il s'applique donc dans la deuxième conduite 214 une pression relativement basse, dite "basse pression".

Les première et deuxième conduites 212 et 214 sont aptes à être reliées à la première et la troisième gorge du sélecteur 50 via une valve d'inversion 220. Cette valve 220 est une électrovalve à trois positions qui peut faire communiquer la première conduite avec la première gorge G1 et la deuxième conduite avec la troisième gorge G3, ou inversement ; dans sa troisième position, les différentes voies de la valve 220 sont isolées les unes des autres.

La pression dans la deuxième conduite 214 est par ailleurs limitée au moyen d'une liaison vers le réservoir 290, sur laquelle est interposé un clapet taré 222. Le tarage du clapet assure que la « basse pression » reste supérieure à la pression atmosphérique.

Enfin, une valve d'activation 292 est interposée entre la deuxième conduite 214 à laquelle sa voie A est reliée, et la chambre de commande 58 à laquelle sa voie C est reliée (sa voie B étant reliée au réservoir 290). La valve 292 est agencée comme la valve 92 du premier mode de réalisation.

Le dispositif 200 montre une possibilité de mise en oeuvre de l'invention avec une pompe et un moteur reliés par un circuit ouvert.

## Revendications

1. Dispositif de transmission hydrostatique (10, 100, 200) comprenant au moins un premier moteur élémentaire (22A, 1A) alimenté via une enceinte d'alimentation (22A,G2) et dont l'échappement de fluide se fait via une enceinte d'échappement (22B,G1), et un sélecteur de cylindrée (50,160), le sélecteur de cylindrée étant apte à adopter une position de bipasse, dans laquelle ladite enceinte d'alimentation est mise en communication avec ladite enceinte d'échappement via une liaison de bipasse (62),
le dispositif comprenant en outre des moyens de restriction (70,72) de ladite liaison de bipasse, et **se caractérisant en ce que**, lorsque le sélecteur est en position de bipasse,
lesdits moyens de restriction sont aptes à être activés pour restreindre la circulation de fluide dans la liaison de bipasse lorsqu'une pression d'échappement régnant dans l'enceinte d'échappement dépasse un seuil de restriction, ledit seuil étant fonction d'une pression de commande régnant dans une chambre de commande (58), et
lesdits moyens de restriction sont aptes à être désactivés pour permettre une circulation de fluide sensiblement libre dans la liaison de bipasse lorsque la pression d'échappement est inférieure audit seuil de restriction.

2. Dispositif de transmission hydrostatique selon la revendication 1, dans lequel, lorsqu'ils sont activés lesdits moyens de restriction (70,72) sont aptes à réguler la pression d'alimentation du premier moteur (22A,1A) à une pression d'équilibre fonction de la pression de commande, et plus particulièrement à une pression d'équilibre sensiblement proportionnelle à la pression de commande.

3. Dispositif de transmission hydrostatique selon l'une quelconque des revendications 1 ou 2, dans lequel les moyens de restriction (70,72) lorsqu'ils sont activés permettent de faire varier une section de passage de la liaison de bipasse (62), de telle manière qu'une augmentation de la pression d'alimentation du premier moteur tend à provoquer une diminution de cette section de passage.

4. Dispositif de transmission hydrostatique selon l'une quelconque des revendications 1 à 3, comportant en outre un distributeur de fluide (130), le sélecteur (160) étant disposé à l'intérieur du distributeur sur un axe de rotation (E) du premier moteur élémentaire.

5. Dispositif de transmission hydrostatique selon l'une quelconque des revendications 1 à 4, dans lequel le sélecteur (50) comporte une pièce mobile (52) dont une surface externe constitue une paroi de la chambre de commande (58), la pression s'exerçant sur cette surface dans la chambre de commande étant apte à commander le déplacement de la pièce mobile provoquant ainsi un changement de cylindrée.

6. Dispositif de transmission hydrostatique selon l'une quelconque des revendications 1 à 5, dans lequel le sélecteur (50) comporte un corps (52), et les moyens de restriction (70,72) sont disposés dans le corps du sélecteur.

7. Dispositif de transmission hydrostatique selon l'une quelconque des revendications 1 à 6, dans lequel le sélecteur (50,160) comporte un corps, et un tiroir coulissant (52) disposé dans un alésage (54,154) dudit corps ; et dans ladite chambre de commande (58) pour la commande des moyens de restriction, la pression de commande s'applique sur le tiroir coulissant (52), permettant de faire passer ou non celui-ci en position de bipasse.

8. Dispositif de transmission hydrostatique selon la revendication 7, comportant en outre une pompe principale (82), et dans lequel le corps du sélecteur (50,160) comporte au moins trois gorges (G1,G2,G3) ;
la première (G1) et la deuxième (G2) gorge forment respectivement, au moins en partie, l'enceinte d'échappement et l'enceinte d'alimentation du premier moteur élémentaire ;
La première gorge (G1) est apte à être reliée à un circuit d'alimentation en fluide ou d'évacuation de fluide, par exemple un orifice principal (84,86) de la pompe principale ;
La deuxième gorge (G2) est apte à être reliée avec la première (G1) ou la troisième gorge (G3) respectivement dans une première et une deuxième position du tiroir (52) du sélecteur, la première position constituant ainsi la position de bipasse ;
La troisième gorge (G3) est apte à être reliée à un circuit d'alimentation en fluide ou d'évacuation de fluide, par exemple un orifice principal (84,86) de la pompe principale ;
les moyens de restriction comportent une pièce de restriction mobile (70); en position de bipasse,
dans une première position de la pièce de restriction, la deuxième gorge (G2) est mise en relation avec la première gorge (G1) sensiblement sans restriction ;
dans au moins une autre position, la deuxième gorge est mise en relation avec la première gorge et la pièce de restriction restreint un passage entre la première et la deuxième gorge.

9. Dispositif de transmission hydrostatique selon la revendication 8, présentant en outre un deuxième moteur élémentaire (24) présentant des enceintes d'échappement (24B) et d'alimentation (24A) formées respectivement, au moins en partie, par la première (G1) et la troisième (G3) gorge.

10. Dispositif de transmission hydrostatique selon la revendication 8, présentant en outre un deuxième moteur élémentaire (1B) comportant une enceinte d'échappement formée au moins en partie par la première gorge (G1), et une enceinte d'alimentation (H2), celle-ci étant apte à être mise en relation avec un circuit d'alimentation en fluide ou d'évacuation de fluide par des moyens additionnels de sélection de cylindrée (120).

11. Dispositif de transmission hydrostatique selon la revendication 9 ou 10, dans lequel les deux moteurs élémentaires (1A,1B) font partie d'un même moteur hydraulique (100) et sont aptes à entraîner un même organe de sortie de celui-ci (112).

12. Dispositif de transmission hydrostatique selon la revendication 2 et l'une quelconque des revendications 8 à 11, dans lequel la pièce de restriction (70) est sollicitée dans des sens opposés par la pression de commande et la pression d'alimentation ; se déplace dans un premier sens et réduit une section dudit passage lorsque la pression d'alimentation tend à augmenter au dessus de la pression d'équilibre ; et se déplace dans un deuxième sens et augmente ladite section dudit passage dans le cas contraire, grâce à quoi elle permet de réguler la pression d'alimentation à la pression d'équilibre.

13. Dispositif de transmission hydrostatique selon l'une quelconque des revendications 8 à 12, dans lequel la pièce de restriction comporte une douille coulissante (70) disposée dans l'alésage, ladite douille permettant, en fonction de sa position relative par rapport aux gorges (G1,G2), d'obturer partiellement ledit passage entre la première et la deuxième gorge.

14. Dispositif de transmission hydrostatique selon la revendication 13, dans lequel la douille (70) et le tiroir (52) présentent des surfaces concentriques et sont disposés sur un axe (D) de l'alésage (54) du sélecteur (50).

15. Dispositif de transmission hydrostatique selon l'une quelconque des revendications 1 à 14, comportant en outre des moyens pour faire varier la pression de commande (92,292).

## Patentansprüche

1. Hydrostatische Übertragungsvorrichtung (10, 100, 200), umfassend mindestens einen ersten Elementarmotor (22A, 1A), der über einen Versorgungsbehälter (22A, G2) versorgt wird und dessen Fluidausstoß über einen Ausstoßbehälter (22B, G1) erfolgt, und einen Hubraumwähler (50, 160), wobei der Hubraumwähler geeignet ist, eine Bypass-Position einzunehmen, in der der Versorgungsbehälter mit dem Ausstoßbehälter über eine Bypass-Verbindung (62) in Verbindung gebracht wird, wobei die Vorrichtung ferner Mittel (70, 72) zur Beschränkung der Bypass-Verbindung umfasst und **dadurch gekennzeichnet ist, dass**, wenn sich der Hubraumwähler in der Bypass-Position befindet,
die Beschränkungsmittel geeignet sind, aktiviert zu werden, um die Fluidzirkulation in der Bypass-Verbindung zu beschränken, wenn ein in dem Ausstoßbehälter herrschender Ausstoßdruck eine Beschränkungsschwelle überschreitet, wobei die Schwelle von einem in einer Steuerkammer (58) herrschenden Steuerdruck abhängig ist, und
die Beschränkungsmittel geeignet sind, deaktiviert zu werden, um eine im Wesentlichen freie Fluidzirkulation in der Bypass-Verbindung zu ermöglichen, wenn der Ausstoßdruck geringer als die Beschränkungsschwelle ist.

2. Hydrostatische Übertragungsvorrichtung nach Anspruch 1, bei der, wenn sie aktiviert sind, die Beschränkungsmittel (70, 72) geeignet sind, den Versorgungsdruck des ersten Motors (22A, 1A) auf einen Ausgleichsdruck in Abhängigkeit vom Steuerdruck und insbesondere auf einen Ausgleichsdruck im Wesentlichen proportional zum Steuerdruck einzustellen.

3. Hydrostatische Übertragungsvorrichtung nach einem der Ansprüche 1 oder 2, bei der es die Beschränkungsmittel (70, 72), wenn sie aktiviert sind, ermöglichen, einen Durchgangsquerschnitt der Bypass-Verbindung (62) derart zu variieren, dass eine Erhöhung des Versorgungsdrucks des ersten Motors dazu neigt, eine Verringerung dieses Durchgangsquerschnitts hervorzurufen.

4. Hydrostatische Übertragungsvorrichtung nach einem der Ansprüche 1 bis 3, ferner umfassend einen Fluidverteiler (130), wobei der Wähler (160) im Inneren des Verteilers auf einer Drehachse (E) des ersten Elementarmotors angeordnet ist.

5. Hydrostatische Übertragungsvorrichtung nach einem der Ansprüche 1 bei 4, bei der der Wähler (50) ein bewegliches Teil (52) umfasst, dessen eine Außenfläche eine Wand der Steuerkammer (58) darstellt, wobei der Druck, der auf diese Fläche in der Steuerkammer ausgeübt wird, geeignet ist, die Verschiebung des beweglichen Teils zu steuern, die somit eine Hubraumänderung hervorruft.

6. Hydrostatische Übertragungsvorrichtung nach einem der Ansprüche 1 bis 5, bei der der Wähler (50) einen Körper (52) umfasst, und die Beschränkungsmittel (70, 72) im Körper des Wählers angeordnet sind.

7. Hydrostatische Übertragungsvorrichtung nach einem der Ansprüche 1 bis 6, bei der der Wähler (50, 160) einen Körper und einen Gleitschieber (52), der in einer Bohrung (54, 154) des Körpers angeordnet ist, umfasst; und bei der in der Steuerkammer (58) zur Steuerung der Beschränkungsmittel der Steuerdruck auf den Gleitschieber (52) ausgeübt wird, wodurch es möglich ist, diesen in die Bypass-Position zu bringen oder nicht.

8. Hydrostatische Übertragungsvorrichtung nach Anspruch 7, ferner umfassend eine Hauptpumpe (82), und bei der der Körper des Wählers (50, 160) mindestens drei Rillen (G1, G2, G3) umfasst,
wobei die erste (G1) und die zweite Rille (G2) zumindest teilweise den Ausstoßbehälter bzw. den Versorgungsbehälter des ersten Elementarmotors bilden,
wobei die erste Rille (G1) geeignet ist, mit einer Fluidversorgungs- oder- ableitungsschaltung, beispielsweise einer Hauptöffnung (84, 86) der Hauptpumpe, verbunden zu werden,
wobei die zweite Rille (G2) geeignet ist, mit der ersten (G1) oder der dritten Rille (G3) in einer ersten bzw. zweiten Position des Schiebers (52) des Wählers verbunden zu werden, wobei die erste Position somit die Bypass-Position darstellt,
wobei die dritte Rille (G3) geeignet ist, mit einer Fluidversorgungs- oder - ableitungsschaltung, beispielsweise einer Hauptöffnung (84, 86) der Hauptpumpe, verbunden zu werden,
wobei die Beschränkungsmittel ein bewegliches Beschränkungsteil (70) in Bypass-Position umfassen,
wobei in einer ersten Position des Beschränkungsteils die zweite Rille (G2) mit der ersten Rille (G1) im Wesentlichen ohne Beschränkung in Verbindung gebracht wird,
wobei in mindestens einer weiteren Position die zweite Rille mit der ersten Rille in Verbindung gebracht wird, und das Beschränkungsmittel einen Durchgang zwischen der ersten und der zweiten Rille beschränkt.

9. Hydrostatische Übertragungsvorrichtung nach Anspruch 8, ferner umfassend einen zweiten Elementarmotor (24), der Ausstoß- (24B) und Versorgungsbehälter (24A) aufweist, die zumindest teilweise von der ersten (G1) bzw. der dritten Rille (G3) gebildet sind.

10. Hydrostatische Übertragungsvorrichtung nach Anspruch 8, ferner umfassend einen zweiten Elementarmotor (1 B), der einen Ausstoßbehälter, der zumindest teilweise von der ersten Rille (G1) gebildet ist, und einen Versorgungsbehälter (H2) umfasst, wobei dieser geeignet ist, mit einer Schaltung zur Fluidversorgung oder Fluidableitung durch zusätzliche Hubraumwählmittel (120) in Verbindung gebracht zu werden.

11. Hydrostatische Übertragungsvorrichtung nach Anspruch 9 oder 10, bei der die beiden Elementarmotoren (1A, 1 B) Teil eines selben Hydraulikmotors (100) und geeignet sind, ein selbes Ausgangselement desselben (112) anzutreiben.

12. Hydrostatische Übertragungsvorrichtung nach Anspruch 2 und einem der Ansprüche 8 bis 11, bei der das Beschränkungsteil (70) in entgegengesetzte Richtungen durch den Steuerdruck und den Versorgungsdruck belastet wird, sich in eine erste Richtung verschiebt und einen Querschnitt des Durchgangs vermindert, wenn der Versorgungsdruck dazu neigt, größer als der Ausgleichsdruck zu werden, und sich in eine zweite Richtung verschiebt und den Querschnitt des Durchgangs im umgekehrten Fall vergrößert, dank dessen es möglich ist, den Versorgungsdruck auf den Ausgleichsdruck einzustellen.

13. Hydrostatische Übertragungsvorrichtung nach einem der Ansprüche 8 bis 12, bei der das Beschränkungsteil eine Gleitbüchse (70) umfasst, die in der Bohrung angeordnet ist, wobei es die Büchse in Abhängigkeit von ihrer relativen Position in Bezug zu den Rillen (G1, G2) ermöglicht, teilweise den Durchgang zwischen der ersten und der zweiten Rille zu verschließen.

14. Hydrostatische Übertragungsvorrichtung nach Anspruch 13, bei der die Büchse (70) und der Schieber (52) konzentrische Flächen aufweisen und auf einer Achse (D) der Bohrung (54) des Wählers (50) angeordnet sind.

15. Hydrostatische Übertragungsvorrichtung nach einem der Ansprüche 1 bis 14, ferner umfassend Mittel um den Steuerdruck (92, 292) zu variieren.

## Claims

1. Hydrostatic transmission apparatus (10, 100, 200) comprising at least a first elementary motor (22A, 1A) fed via a feed enclosure (22A, G2) and from which fluid is discharged via a discharge enclosure (22B, G1), and a cylinder capacity selector (50, 160), the cylinder capacity selector being suitable for taking up a bypass position, in which said feed enclosure is put into communication with said discharge enclosure via a bypass link (62), the apparatus further comprising constriction means (70, 72) for constricting said bypass link, and being **characterized in that**, when the selector is in the bypass position, said constriction means are suitable for being activated to restrict the flow of fluid through the bypass link when a discharge pressure prevailing in the discharge enclosure exceeds a constriction threshold, said threshold being a function of a control pressure prevailing in a control chamber (58), and said constriction means are suitable for being deactivated to enable fluid to flow substantially freely through the bypass link when the discharge pressure is less than said constriction threshold.

2. Hydrostatic transmission apparatus according to claim 1, wherein, when they are activated, said constriction means (70, 72) are suitable for regulating the feed pressure of the first motor (22A, 1A) to a balancing pressure that is a function of the control pressure, and more particularly to a balancing pressure that is substantially proportional to the control pressure.

3. Hydrostatic transmission apparatus according to claim 1 or claim 2, wherein, when they are activated, the constriction means (70, 72) make it possible to vary a through section of the bypass link (62), in such a manner that an increase in the feed pressure of the first motor tends to cause a decrease in said through section.

4. Hydrostatic transmission apparatus according to any one of claims 1 to 3, further comprising a fluid distributor (130), the selector (160) being disposed inside the distributor on an axis of rotation (E) of the first elementary motor.

5. Hydrostatic transmission apparatus according to any one of claims 1 to 4, wherein the selector (50) includes a moving part (52) having an outside surface that constitutes a wall of the control chamber (58), the pressure that is exerted on said surface inside the control chamber being suitable for causing the moving part to move, thereby causing the cylinder capacity to change.

6. Hydrostatic transmission apparatus according to any one of claims 1 to 5, wherein the selector (50) has a body (52), and the constriction means (70, 72) are disposed in the body of the selector.

7. Hydrostatic transmission apparatus according to any one of claims 1 to 6, wherein the selector (50, 160) has a body, and a slide (52) that is disposed in a bore (54, 154) in said body; and, inside said control chamber (58) for controlling the constriction means, the control pressure is applied on the slide (52), making it possible to cause said slide to go into the bypass position or not to cause said slide to go into said bypass position.

8. Hydrostatic transmission apparatus according to claim 7, further comprising a main pump (82), and wherein:
the body of the selector (50, 160) is provided with at least three grooves (G1, G2, G3);
the first groove (G1) and the second groove (G2) respectively form at least part of the discharge enclosure and at least part of the feed enclosure of the first elementary motor;
the first groove (G1) is suitable for being connected to a fluid feed or fluid discharge circuit, e.g. to a main orifice (84, 86) of the main pump;
the second groove (G2) is suitable for being connected to the first groove (G1) or to the third groove (G3) respectively when the slide (52) of the selector is in a first position and when said slide is in a second position, the first position thus constituting the bypass position;
the third groove (G3) is suitable for being connected to a fluid feed or fluid discharge circuit, e.g. to a main orifice (84, 86) of the main pump;
the constriction means comprise a moving constriction part (70); and
in the bypass position:
when the constriction part is in a first position, the second groove (G2) is put into communication with the first groove (G1) substantially without any constriction; and
when the constriction part is in at least one other position, the second groove is put into communication with the first groove and the constriction part constricts a through passage between the first groove and the second groove.

9. Hydrostatic transmission apparatus according to claim 8, further comprising a second elementary motor (24) having a discharge enclosure (24B) and a feed enclosure (24A) formed respectively, and at least in part, by the first groove (G1) and by the third groove (G3).

10. Hydrostatic transmission apparatus according to claim 8, further comprising a second elementary motor (1B) having a discharge enclosure formed at least in part by the first groove (G1), and a feed enclosure (H2), which feed enclosure is suitable for being put into communication with a fluid feed or fluid discharge circuit by additional cylinder capacity selection means (120).

11. Hydrostatic transmission apparatus according to claim 9 or claim 10, wherein the two elementary motors (1A, 1B) are part of the same hydraulic motor (100) and are suitable for driving a common outlet member (112) of said hydraulic motor.

12. Hydrostatic transmission apparatus according to claim 2 and to any one of claims 8 to 11, wherein the constriction part (70): is urged in opposite directions by the control pressure and by the feed pressure; moves in a first direction and reduces the section of said through passage when the feed pressure is tending to increase above the balancing pressure; and otherwise moves in a second direction and increases said section of said through passage; whereby said constriction part makes it possible to regulate the feed pressure to the balancing pressure.

13. Hydrostatic transmission apparatus according to any one of claims 8 to 12, wherein the constriction part comprises a slidably mounted bushing (70) disposed in the bore, said bushing making it possible, as a function of its position relative to the grooves (G1, G2), to close off in part said through passage between the first and the second groove.

14. Hydrostatic transmission apparatus according to claim 13, wherein the bushing (70) and the slide (52) have concentric surfaces and are disposed on an axis (D) of the bore (54) of the selector (50).

15. Hydrostatic transmission apparatus according to any one of claims 1 to 14, further comprising means (92, 292) for causing the control pressure to vary.
